# EUROPEAN PATENT APPLICATION

(11) **EP 1 818 749 A1**
(43) Date of publication of application: **15.08.2007**
(21) Application number: 05809700.7
(22) Date of filing: 24.11.2005
(51) Int. Cl.: G05D 16/10, F17C 13/00

(54) **VALVE DEVICE FOR HIGH-PRESSURE GAS**

(30) Priority: 29.11.2004 JP 2004344141; 10.02.2005 JP 2005034715
(71) Applicant: JTEKT CORPORATION, Chuo-ku Osaka-shi Osaka 542-8502 (JP); Toyooki Kogyo Co., Ltd., Okazaki-shi, Aichi 444-3512 (JP)
(72) Inventor: KUROYANAGI, Munetoshi, Chuo-ku, Osaka-shi, Osaka 5428502 (JP); SHIMA, Toshihiko, Chuo-ku, Osaka-shi, Osaka 5428502 (JP); SUZUKI, Takuya, Chuo-ku, Osaka-shi, Osaka 5428502 (JP); KAMIYA, Tadayosh, TOYODA KOKI K. K., Okazaki-shi, Aichi 4443592 92 (JP); SHIRAI, Soichi, TOYOOKI KOGYO CO., LTD., Okazaki-shi, Aichi 4443592 92 (JP); SHIRAI, Nobuyuki, TOYOOKI KOGYO CO., LTD., Okazaki-shi, Aichi 4443592 92 (JP); FUJIWARA, Hidetoshi, Chuo-ku, Osaka-shi, Osaka 5428502 (JP)
(74) Representative: Leson, Thomas Johannes Alois
(86) International application number: PCT/JP2005/021514
(87) International publication number: WO 2006/057264

(57) **Abstract**

A valve device for high-pressure gas opens and closes a communication hole for communicating a primary pressure chamber, into which the high-pressure gas flows, to a secondary pressure chamber where pressure is lower than that of the primary pressure chamber. The valve device has a valve seat member provided at the communication hole and a valve body that is caused to be seated on and to leave from the valve seat member to open and close the communication hole. The communication hole has an opening connected to the primary pressure chamber. The opening has a reception recess opened toward the primary pressure chamber. In the reception recess is fitted the valve seat member. As a result, the valve device can achieve sufficient sealing ability.

## Description

### TECHNICAL FIELD

The present invention relates to a valve device for a high pressure gas. More particularly, the present invention relates to a valve device attached to a gas tank that is filled with a high pressure gas such as a hydrogen gas or the like used in a fuel cell vehicle, and structured such as to open and close a communication hole through which the high pressure gas passes.

### BACKGROUND ART

In general, a pressure reducing valve for a high pressure gas is provided with an on-off valve set between a primary pressure chamber into which a high pressure gas flows, and a secondary pressure chamber for supplying the gas to the outside. When the on-off valve serving as the valve device for high pressure gas is opened and closed, the high pressure gas in the primary pressure chamber is depressurized so as to flow into the secondary pressure chamber, and is thereafter supplied to the outside. Patent Document 1 discloses such an on-off valve.

The on-off valve in the Patent Document 1 includes a metal cylindrical valve seat member provided in a communication hole connecting the primary pressure chamber with the secondary pressure chamber, and a metal valve body selectively contacts and separates from the valve seat member. In detail, a valve seat accommodating recess is formed in an opening connected to the secondary pressure chamber of the communication hole. The valve seat accommodating recess has a larger diameter than the opening. The valve seat member is fitted and attached to the valve seat accommodating recess. An end surface of the valve seat member facing the primary pressure chamber is brought into contact with a bottom surface of the valve seat accommodating recess, and an outer circumferential surface of the valve seat member is brought into contact with a circumferential surface of the valve seat accommodating recess. The valve body is accommodated in the secondary pressure chamber. When the valve body separates from the valve seat member, the high pressure gas in the primary pressure chamber flows into the secondary pressure chamber through the communication hole.

In the on-off valve as mentioned above, since the pressure of the primary pressure chamber is higher than the pressure of the secondary pressure chamber, the valve seat member receives a force acting to separate the valve seat member from a bottom surface of the valve seat accommodating recess from the high pressure gas. Accordingly, a sealing performance between the end surface of the valve seat member facing the primary pressure chamber and the bottom surface of the valve seat accommodating recess tends to be deteriorated. In other words, the high pressure gas in the primary pressure chamber enters the space between the bottom surface of the valve seat accommodating recess and the end surface of the valve seat member brought into contact with the bottom surface, and tends to leak into the secondary pressure chamber through the space between the outer circumferential surface of the valve seat member and the circumferential surface of the valve seat accommodating recess.

In recent years, in order to achieve an increase of a reserving capacity of a hydrogen tank used in the fuel cell vehicle or the like, the pressure of stored hydrogen gas has been increased (for example, 70 MPa). In the case of depressurizing the high pressure hydrogen gas as mentioned above by using the pressure reducing valve provided with the on-off valve disclosed in the Patent Document 1, the hydrogen gas further tends to enter the space between the bottom surface of the valve seat accommodating recess and the end surface of the valve seat member, which contacts the bottom surface. In other words, it is hard to ensure the sealing performance between the valve seat member and the valve seat accommodating recess.
Patent Document 1: Japanese Laid-Open Patent Publication No. 8-334280

### DISCLOSURE OF THE INVENTION

An objective of the present invention is to provide a valve device for a high pressure gas that ensures a sealing performance.

In order to achieve the objective mentioned above, the present invention provides a valve device for a high pressure gas. The valve device opens and closes a communication hole connecting a primary pressure chamber, into which a high pressure gas is flowed, with a secondary pressure chamber having a lower pressure than the primary pressure chamber. The valve device for the high pressure is provided with a valve seat member provided in the communication hole, and a valve body that selectively contacts and separates from the valve seat member for opening and closing the communication hole. The communication hole has an opening connected to the primary pressure chamber. The opening is provided with an accommodating recess open toward the primary pressure chamber. The valve seat member is fitted and attached to the accommodating recess.

### BRIEF DESCRIPTION OF THE DRAWINGS

Fig. 1 is a cross-sectional view illustrating a pressure reducing valve in accordance with an embodiment of the present invention; and
Fig. 2 is an enlarged view illustrating the valve seat in the pressure reducing valve in Fig. 1 and its surroundings.

### BEST MODE FOR CARRYING OUT THE INVENTION

A description will be given below of an embodiment obtained by specifying the present invention with reference to the accompanying drawings.

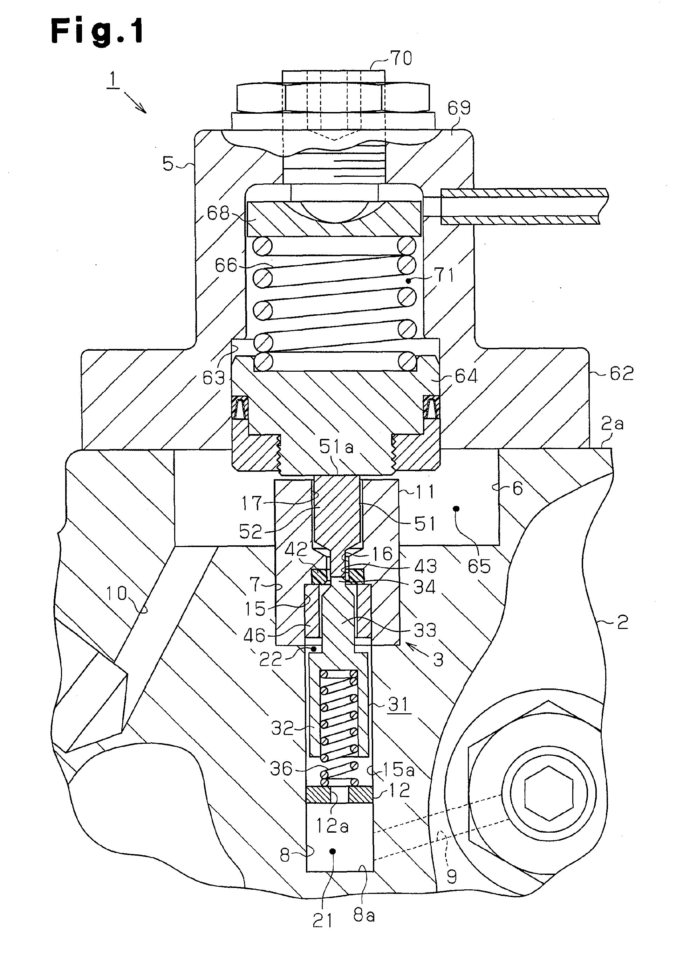

A pressure reducing valve 1 shown in Fig. 1 is assembled, for example, in a tank mounted to a fuel cell vehicle for filling the tank with a high pressure hydrogen gas. The pressure reducing valve 1 is arranged in a plug body housing 2 closing an opening of the tank. The pressure reducing valve 1 includes a valve mechanism 3 embedded in the plug body housing 2 from an outer side, and an outer housing 5 put on the plug body housing 2 in such a manner as to cover the valve mechanism 3.

In the plug body housing 2, there are formed a first recess 6, a second recess 7 formed in a center portion of the first recess 6, and a third recess 8 formed in a center portion of the second recess 7. An inflow passage 9 communicating with an interior of the tank is formed in a side wall near a bottom surface 8a of the third recess 8. An outflow passage 10 communicating with an outer supply port (not shown) is formed in a bottom surface of the first recess 6.

A cylindrical lid 11 is fixed to the second recess 7. Further, a bottom body 12 is fitted and attached to a portion near a bottom portion of the third recess 8. An inner space of the lid 11 includes a valve accommodating hole 15, a communication hole 16 and a transmission member accommodating hole 17 which are continuously provided from the second recess 7 toward the first recess 6. In other words, the lid 11 serves as a housing having the communication hole 16. A space between the bottom body 12 and the bottom surface 8a of the third recess 8 defines an inflow chamber 21, and a space between the communication hole 16 and the bottom body 12 defines a valve chamber 22. The valve chamber 22 serves as a primary pressure chamber, and a circumferential surface 15a of the valve accommodating hole 15 serves as a wall surface defining the primary pressure chamber. The inflow chamber 21 and the valve chamber 22 are connected with each other by a through hole 12a formed in a center portion of the bottom body 12, and the hydrogen gas flowing into the inflow chamber 21 from the inflow passage 9 flows into the valve chamber 22 through the through hole 12a.

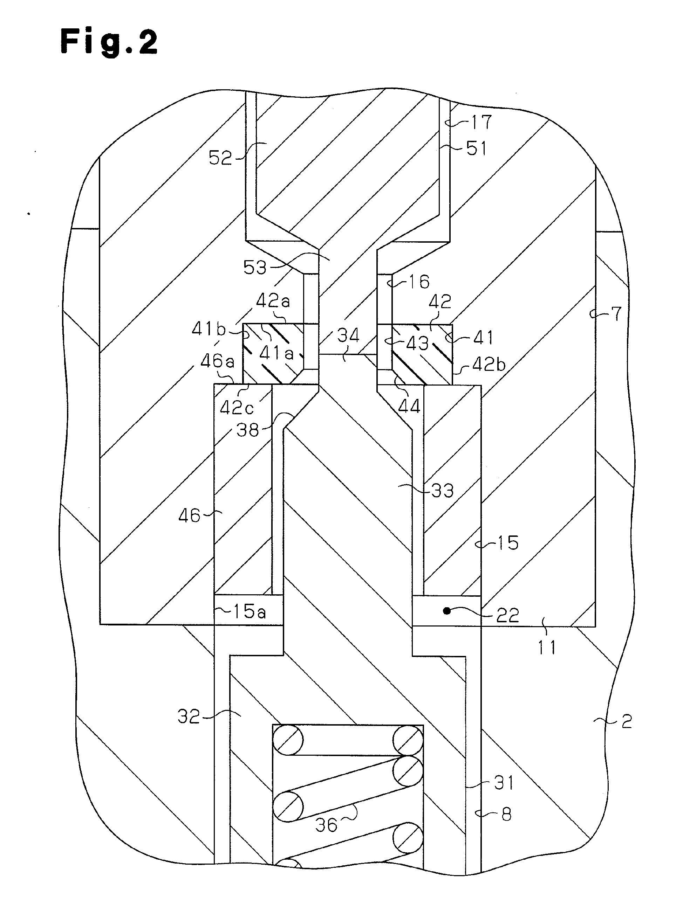

A metal valve body 31 is accommodated in the valve chamber 22. The valve body 31 includes a spring accommodating portion 32 formed in a cylindrical shape, a valve portion 33 protruding along the axial direction from an end surface of the spring accommodating portion 32 that faces the communication hole 16, and a contact portion 34 formed in a distal end of the valve portion 33. The outer diameter of the spring accommodating portion 32 is formed slightly smaller than the diameter of the valve accommodating hole 15. The valve body 31 is urged toward the communication hole 16 (an upper side in Fig. 1) by a coil spring 36 interposed between an inner space of the spring accommodating portion 32 and the bottom body 12. As shown in Fig. 2, the valve portion 33 is formed in a substantially columnar shape having the outer diameter smaller than the outer diameter of the spring accommodating portion 32. A distal end portion of the valve portion 33 is formed in a circular truncated cone shape provided with a tapered surface 38. The contact portion 34 is formed so as to protrude along the axial direction from the distal end of the valve portion 33, and is formed in a columnar shape having the outer diameter smaller than the outer diameter of the valve portion 33.

The diameter of the communication hole 16 is formed so as to be smaller than the diameter of the valve accommodating hole 15 and larger than the outer diameter of the contact portion 34. In an opening of the communication hole 16 facing the valve chamber 22, there is formed a valve seat accommodating recess 41 having a larger diameter than the communication hole 16. The valve seat accommodating recess 41 is open toward the valve chamber 22. The diameter of the valve seat accommodating recess 41 is formed smaller than the diameter of the valve accommodating hole 15. A valve seat member 42 is fitted and attached to the valve seat accommodating recess 41. The valve body 31 selectively contacts and separates from the valve seat member 42. The valve seat member 42 is made of a synthetic resin, and is formed by an elastically deformable polyimide resin in the present embodiment. Accordingly, the valve body 31 is prevented from being stuck to the valve seat member 42. The valve seat member 42 is formed in an annular shape, and is formed such that the length in the axial direction is equal to a depth of the valve seat accommodating recess 41. Further, the outer diameter of the valve seat member 42 is formed so as to be equal to the diameter of the valve seat accommodating recess 41. In a state in which the valve seat member 42 is fitted and attached to the valve seat accommodating recess 41, a first end surface 42a of the valve seat member 42 in an opposite side to the valve chamber 22 is brought into contact with a bottom surface 41a of the valve seat accommodating recess 41, and an outer circumferential surface 42b of the valve seat member 42 is brought into contact with a circumferential surface 41b of the valve seat accommodating recess 41. Since the valve seat member 42 is fitted and attached to the valve seat accommodating recess 41, which opens toward the valve chamber 22, the valve seat member 42 is pressed against the bottom surface 41a of the valve seat accommodating recess 41 by the hydrogen gas in the valve chamber 22.

An inflow hole 43 connecting the valve chamber 22 to the communication hole 16 is formed in a center portion in the radial direction of the valve seat member 42. The inner diameter of the inflow hole 43 is formed equal to the inner diameter of the communication hole 16. In an opening of the inflow hole 43 toward the valve chamber 22, there is formed a tapered surface 44 in such a manner as to be in surface contactable with the tapered surface 38 of the valve portion 33. The diameter of a portion of the inflow hole 43 defined by the tapered surface 44 becomes gradually larger toward to the valve chamber 22. In the present embodiment, the valve body 31 and the valve seat member 42 structured as mentioned above forms an on-off valve serving as the valve device for the high pressure gas.

A metal sleeve 46 for fixing the valve seat is press fitted to the circumferential surface 15a of the valve accommodating hole 15. The sleeve 46 is formed in a cylindrical shape, and the inner diameter of the sleeve 46 is formed slightly larger than the diameter of the valve portion 33. Further, the length in the axial direction of the sleeve 46 is formed shorter than the length in the axial direction of the valve portion 33. An end surface 46a facing the valve seat accommodating recess 41 in the sleeve 46 is brought into contact with a second end surface 42c facing the valve body 31 in the valve seat member 42, thereby preventing the valve seat member 42 from coming off the valve seat accommodating recess 41. In other words, a step between the communication hole 16 and the valve seat accommodating recess 41, and the sleeve 46 clamps the valve seat member 42 with no gap.

The diameter of the transmission member accommodating hole 17 is formed larger than the communication hole 16. Further, an end portion connected to the communication hole 16 in the transmission member accommodating hole 17 is reduced in diameter toward the communication hole 16 so as to be set to the same diameter as the communication hole 16. A transmission member 51 is accommodated in the transmission member accommodating hole 17. The transmission member 51 is provided with a circular cylinder portion 52 having a diameter which is slightly smaller than the diameter of the transmission member accommodating hole 17, that is, the diameter of a portion that is not reduced in diameter in the hole 17. An end portion inserted to the communication hole 16 of the circular cylinder portion 52 is formed in a circular truncated cone shape, and a contact portion 53 having a smaller diameter than the diameter of the circular cylinder portion 52 is provided in a protruding manner in a distal end thereof along the axial direction. The diameter of the contact portion 53 is equal to the diameter of the contact portion 34 of the valve body 31. The contact portion 53 extends along the axial direction so as to be inserted to the interior of the communication hole 16, and is brought into contact with the contact portion 34 of the valve body 31.

As shown in Fig. 1, the outer housing 5 is formed in a cylindrical shape in which one end is closed, and a flange portion 62 is formed in an opening. The flange portion 62 is fastened to an outer side surface 2a of the plug body housing 2, so that the outer housing 5 closes the first recess 6.

Further, a cylinder 63 is formed in the opening of the outer housing 5. The cylinder 63 is arranged so as to be coaxial with the lid 11. A piston 64 which is slidable within the cylinder 63 is arranged within the cylinder 63. The piston 64 separates the inner space of the outer housing 5 from the first recess 6, which is closed by the outer housing 5. In the present embodiment, the outer housing 5 and the first recess 6 closed by the piston 64 form a pressure reducing chamber 65. The pressure reducing chamber 65 serving as the secondary pressure chamber comes to a lower pressure than the valve chamber 22 serving as the primary pressure chamber at a time when the pressure reducing valve 1 is operated. The hydrogen gas in the valve chamber 22 flows into the pressure reducing chamber 65 through the inflow hole 43 of the valve seat member 42 and the communication hole 16 of the lid 11, and is supplied to the outside through the outflow passage 10 open to a bottom surface of the pressure reducing chamber 65.

A coil spring 66 is accommodated within the outer housing 5. One end of the coil spring 66 is brought into contact with the piston 64, and the other end thereof is brought into contact with a spring receiver 68 arranged close to a closing portion 69 of the outer housing 5. A distal end of an adjusting screw 70 is brought into contact with the spring receiver 68. The adjusting screw 70 is provided so as to pass through the closing portion 69 of the outer housing 5. The piston 64 is urged toward the pressure reducing chamber 65 on the basis of an elastic force of the coil spring 66. The pressure reducing valve 1 is constituted by a manual valve which adjusts a force that the coil spring 66 applies to the piston 64, by adjusting a screwing amount of the adjusting screw 70 with respect to the closing portion 69, thereby lowering the high pressure gas to a pressure balancing with the urging force. In the present embodiment, the inner space of the outer housing 5 defined by the piston 64 constitutes a pressure adjusting chamber 71. An end surface 51a of the transmission member 51 is brought into contact with a surface facing the pressure reducing chamber 65 in the piston 64. The end surface 51a is positioned in an opposite side to the contact portion 53. A movement of the piston 64 is transmitted to the valve body 31 via the transmission member 51. Accordingly, when contacting the valve seat member 42, the valve body 31 closes the communication hole 16. When separating from the valve seat member 42, the valve body 31 opens the communication hole 16.

In the pressure reducing valve 1 structured as mentioned above, to the piston 64, there are applied an elastic force generated by the coil spring 66 acting in a direction in which the valve body 31 opens the communication hole 16, a pressure of the pressure adjusting chamber 71, a pressure of the pressure reducing chamber 65 acting in a direction in which the valve body 31 closes the communication hole 16, and an elastic force generated by the coil spring 36. When the gas pressure in the pressure reducing chamber 65 ascends from the balanced state of these forces, the piston 64 is moved toward the pressure adjusting chamber 71, and the valve body 31 seats on the valve seat member 42 against the urging force of the coil spring 36. In other words, the tapered surface 38 of the valve body 31 is brought into contact with the tapered surface 44 of the valve seat member 42, and the on-off valve is closed. Accordingly, the inflow of the hydrogen gas from the valve chamber 22 to the pressure reducing chamber 65 is shut off.

Further, if the gas pressure of the pressure reducing chamber 65 is reduced from the balanced state mentioned above, the piston 64 moves toward the pressure reducing chamber 65, and the valve body 31 is moved toward the bottom body 12 together with the piston 64 and the transmission member 51, and separates from the valve seat member 42. In other words, a gap is formed between the tapered surface 38 of the valve body 31 and the tapered surface 44 of the valve seat member 42, and the on-off valve is opened. Accordingly, the hydrogen gas in the valve chamber 22 flows into the pressure reducing chamber 65 through the inflow hole 43 and the communication hole 16.

Since the piston 64 slides in correspondence to the urging force generated by the coil spring 66 and the pressure of the pressure reducing chamber 65, and the valve body 31 of the on-off valve selectively contacts and separates from the valve seat member 42 as mentioned above, the gas pressure in the pressure reducing chamber 65 is adjusted in correspondence to the urging force of the coil spring 66. As mentioned above, the pressure of the hydrogen gas supplied to the outside through the outflow passage 10 is reduced to a predetermined pressure (for example, 1 MPa or less) set by the adjusting screw 70, from the pressure (for example, 70 MPa) of the hydrogen tank. In other words, the pressure reducing valve 1 adjusts the pressure of the pressure adjusting chamber 71 to a predetermined set pressure.

The present embodiment mentioned above has the following advantages.
(1) The valve seat accommodating recess 41 is open toward the valve chamber 22 which has the higher pressure than the pressure reducing chamber 65 and into which the hydrogen gas flows. Accordingly, the valve seat member 42 fitted and attached to the valve seat accommodating recess 41 is pressed toward the bottom surface 41a of the valve seat accommodating recess 41 by the hydrogen gas of the valve chamber 22. Accordingly, it is possible to improve an adhesion performance between the bottom surface 41a of the valve seat accommodating recess 41, and the end surface of the valve seat member 42 in the opposite side to the valve chamber 22, in the first end surface 42a of the valve seat member 42 brought into contact with the bottom surface 41a. As a result, the hydrogen gas in the valve chamber 22 is prevented from leaking to the pressure reducing chamber 65 through the space between the bottom surface 41a of the valve seat accommodating recess 41 and the first end surface 42a of the valve seat member 42. In other words, it is possible to ensure a sealing performance between the bottom surface 41a of the valve seat accommodating recess 41 and the valve seat member 42. Further, in the present embodiment, since the hydrogen gas has the high pressure of 70 MPa, the valve seat member 42 receives the very large pressure from the hydrogen gas in the valve chamber 22. Accordingly, it is possible to further improve the adhesion performance between the bottom surface 41a of the valve seat accommodating recess 41 and the first end surface 42a of the valve seat member 42, that is, the sealing performance.

The embodiment in accordance with the present invention may be modified as follows.

The valve seat member 42 in accordance with the embodiment mentioned above may be molded of synthetic resins other than the polyimide resin. Further, the valve seat member 42 may be made of a metal.

In the embodiment mentioned above, the valve seat fixing sleeve 46 is provided in the pressure reducing valve 1, however, the valve seat fixing sleeve 46 may be omitted.

In the embodiment mentioned above, the valve body 31 is moved on the basis of the movement of the piston 64, however, the structure may be made such that the valve body 31 is moved on the basis of a movement of a diaphragm.

In the embodiment mentioned above, the pressure reducing valve 1 is provided in the tank that is filled with the high pressure hydrogen gas. However, the pressure reducing valve 1 may be provided in a tank that is filled with high pressure gas other than hydrogen gas. Further, the on-off valve may be provided in the other electromagnetic valve or the like than the pressure reducing valve 1.

## Claims

1. A valve device for a high pressure gas, opening and closing a communication hole connecting a primary pressure chamber into which a high pressure gas is flowed, with a secondary pressure chamber having a lower pressure than the primary pressure chamber, the valve device being
**characterized by:**
a valve seat member provided in the communication hole; and
a valve body that selectively contacts and separates from the valve seat member for opening and closing the communication hole,
wherein the communication hole has an opening connected to the primary pressure chamber, the opening is provided with an accommodating recess open toward the primary pressure chamber, and the valve seat member is fitted and attached to the accommodating recess.

2. The valve device for a high pressure gas according to claim 1, **characterized in that** the valve seat member is provided with an end surface facing the valve body, the valve device further comprising a sleeve for fixing the valve seat member to the valve seat accommodating portion, and the sleeve is fixed to a wall surface defining the primary pressure chamber and is brought into contact with the end surface.

3. The valve device for a high pressure gas according to claim 2, **characterized in that** a step is formed between the communication hole and the accommodating recess, and the valve seat member is clamped by the step and the sleeve.

4. The valve device for a high pressure gas according to any one of claims 1 to 3, **characterized in that** the valve device is installable to a tank that is filled with a hydrogen gas.

5. The valve device for a high pressure gas according to any one of claims 1 to 4, **characterized in that** the valve seat member is made of a synthetic resin.

6. The valve device for a high pressure gas according to any one of claims 1 to 5, **characterized in that** the valve device is capable of being assembled in a pressure reducing valve adjusting a pressure in the secondary pressure chamber to a predetermined set pressure, and the pressure reducing valve is provided with an urging member generating a force urging the valve body in a direction of separating the valve body from the valve seat member, and an adjusting mechanism capable of adjusting the urging force in accordance with a manual operation for changing the set pressure.

7. A valve device for a high pressure gas, opening and closing a communication hole connecting a primary pressure chamber into which a high pressure gas is flowed, with a secondary pressure chamber having a lower pressure than the primary pressure chamber, the valve device being
**characterized by:**
a housing having the communication hole;
a valve seat member provided in the communication hole; and
a valve body that selectively contacts and separates from the valve seat member for opening and closing the communication hole,
wherein the communication hole has an opening connected to the primary pressure chamber, the opening is provided with an accommodating recess open toward the primary pressure chamber, and the valve seat member is fitted and attached to the accommodating recess.
